# EUROPEAN PATENT APPLICATION

(11) **EP 1 814 065 A1**
(43) Date of publication of application: **01.08.2007**
(21) Application number: 06100893.4
(22) Date of filing: 26.01.2006
(51) Int. Cl.: G06K 19/07

(54) **Storage device for a sheet-shaped data memory card, storage sheet and storage case**

(71) Applicant: Gepe Development AB, 6304 Zug (CH)
(72) Inventor: Pettersson, Sven, 6315 Oberägeri (CH)
(74) Representative: Bokinge, Ole

(57) **Abstract**

A storage device (101) for a sheet-shaped data memory card (131). The device comprises a storage recess (103), sized and adapted for receiving and holding the data memory card (131). The storage recess (103) comprises a holding portion (109), where edge portions of the recess (103) are in contact with and hold the data memory card (131) by edges thereof when the data memory card is in the storage recess (103), and a gripping portion (105) for facilitating a user's gripping of an edge portion of the data memory card (131) when the data memory card (131) is in the storage recess (103). The gripping portion (105) is positioned at a corner portion of the storage recess (103). There is also a data memory card storage sheet (151, 161), comprising at least one storage device, and a data memory card storage case (162), comprising such a storage sheet (151, 161).

## Description

### Technical field

The present invention relates to a storage device for a data memory card. More specifically it relates to a storage device for a sheet-shaped data memory card, for example a flash memory based card such as CompactFlash®, Secure Digital (SD) etc. The invention also relates to a storage sheet and a storage case comprising the storage device.

### Background

Data memory cards, and in particular non-volatile, readable/writable data memory cards, are increasingly being used in various consumer electronic products, especially portable products such as digital cameras, mobile phones, video recorders, mp3-players, GPS-receivers, game consoles etc. At present, a predominant type of cards are sheet shaped and based on flash memory technology, including, for example, CompactFlash® (CF), Secure Digital (SD), xD, Memory Stick, Multimedia Card (MMC), to mention a few. Additionally, many game consoles, for example Nintendo DS, often use their own type of sheet shaped data memory cards for distributing and storing games. The skilled person is familiar with these and other types of data memory cards.

The increase of devices using these types of cards, in combination with decreasing price, increasing capacity and performance of the cards, has resulted in that many users have to keep track of a number of cards, often more than one card per device using the cards.

The cards are not only used for temporal data storage in a specific device, but also for more long term storage outside the device and for sharing data between devices.

Moreover, the falling prices per storage unit for these types of data memory cards, has made, and will make, it viable and of interest to replace traditional types of storage medias such as CDs, CD-R/RW, DVDs, DVD-R/RW, hard drives, floppy discs, DV tapes etc., with data memory cards of the above, or similar, type. For example, instead of distributing movies on DVDs, or storing personal video recordings on DVD or DV tapes, data memory storage cards may be used.

When the number of data memory cards per user increases, for example due to one, or many, of the above mentioned reasons, there will be of increasing interest and importance for users to be able to store the cards in a reliable, convenient and cost efficient way.

Today, there are some commercially available storage cases for sheet shaped data memory cards. However, these cases are relatively expensive and targeted for storage of only a single card, or a few, relatively expensive cards. Also, many of these cases are primarily designed as transport storage cases.

Inside a known type of storage case, there is a pocket, moulded in a hard plastic material. The card is secured in the pocket by use of projections that extend from edges of the pocket and that are holding the card by its edges. Except from the projections, which are in a holding portion of the pocket, there are gripping portions, typically at opposite edges of a stored card, which allow a user to grip the edges of a stored card using two or more fingers, typically a thumb and an index finger, release the card from the holding portion and remove the card from the pocket.

However, the known storage cases suffer from either poor card holding performance, or poor card removal performance, i.e. there is either problems with a card that easily falls out from the pocket during storage, or a card that is hard to remove from the pocket. This is mainly due to the relatively small size, or form factor, of the sheet shaped data memory cards. Large gripping portions along edges of the card, results in small holding portions, which makes it difficult to hold a stored card in a reliable way, and large holding portions results in small gripping portions, which makes it hard to grip and remove the card.

### Summary of the Invention

An object of the invention is to overcome problems in the prior art. A specific object is to provide a storage device in which a sheet-shaped data memory card can be securely stored and conveniently removed.

The invention is defined by the appended independent claim. Preferred embodiments are set forth in the dependent claims and in the following description and drawings.

Hence, according to a first aspect, there is provided a storage device for a sheet-shaped data memory card, comprising a storage recess, sized and adapted for receiving and holding the data memory card, said storage recess comprising a holding portion, where edge portions of the recess are in contact with and hold the data memory card by edges thereof when the data memory card is in the storage recess, and a gripping portion for facilityating a user's gripping of an edge portion of the data memory card when the data memory card is in the storage recess. The gripping portion is positioned at a corner portion of the storage recess.

A "corner portion" is a portion where two major edges meet. For example, when two major edges meet, e.g. at 90-degrees, the corner portion is a physical edge portion starting at a first major edge right before it starts to change direction, following the physical edge portion during the direction change and ending at a second major edge right after the direction change is complete. A corner portion may include minor edges located at, or between, major edges. A minor edge may e.g. be caused by bevelling. A bevelled corner located between major edges may e.g. be found on a Memory Stick card or a Secure Digital (SD) card.

Using a corner portion for the gripping portion means that the gripping portion only need to occupy a small portion of card edges. Thus the holding portion can be relatively large, which allows for secure storage. At the same time, a stored card can be easily and conveniently gripped and removed by pulling and lifting the sheet shaped memory card by a corner edge portion, typically by only using a single finger, e.g. an index finger. When doing so, a lifting force is exerted, typically comprising a force component perpendicular to the surface of the card, and a force component in the horizontal plane of the card, mainly directed from the corner portion being lifted towards the center of the card, i.e. diagonally across the card, and typically towards a diagonally opposed corner, or edge, of the card. As a result, the card is pivoted upwards using a diagonal of the card and a large momentum is accomplished, which facilitates removal of the card.

Moreover, the net force from the lifting force and holding forces exerted by the holding portion of the recess, typically results in a rotational movement round the diagonal axis of the card, such that the card also "rotates" out from the recess, which further facilitates the removal of the card.

The gripping portion, when the data memory card is in the storage recess, may form a substantially fingertip-sized space between an edge of the storage recess and an edge portion of the data memory card.

"Fingertip-sized space" means that an adult, except for someone having particularly big fingers, shall be able to fit the tip of a finger in the space. Typically this means a space of about one or a few square centimeters and a distance of approximately 0.5 to 2 centimeters, preferably from about 0.5 to about 1 centimeter, or more between the storage recess edge and the edge portion of the card.

The storage recess may only differ in shape from the data memory card by the gripping portion.

This way, maximum contact between the edges of the recess and the memory card can be accomplished.

The gripping portion may extend along parts of two adjacent edges of the data memory card.

A shape of the holding portion may substantially coincide with a shape of the data memory card and at least one dimension of the holding portion may be slightly smaller than a corresponding dimension of the data memory card, such that, when the data memory card is in the storage recess, edges of the storage recess may be in press fit contact with the corresponding edges of the data memory card.

At least one edge portion of the storage recess may be resiliently deformable.

In this context, "deformable" refers to deformation under influence of moderate and durable force, i.e. such that can be the result from dedicated pressure of a human finger. There should be no, or only negligible, deformation under influence of small forces, or forces occurring under fractions of a second, e.g. caused by gravitational influence, or from small vibrations or percussions. In the holding portion, when a card is in the recess, the resiliently deformable edge portion may provide holding forces. During removal of the card, pressure exerted by a finger used at the griping portion, may provide forces that deforms the resiliently deformable edge portion and thereby facilitates removal of the card.

In one embodiment, all edge portions of the storage recess are resiliently deformable.

In the holding portion, the resiliently deformable edge portions facilitate holding the card in the recess, and in the gripping portion, a resiliently deformable edge portion may facilitate insertion of a finger in order to remove the card.

The device may be made of a resiliently deformable material.

Using a resilently deformable material enhance the removal properties of the card. For example, during removal, the opposite corner, or sides, with respect to the corner being lifted, will be pressed into the adjacent edges of the recess which will deform. The deformation results in that holding forces, exerted by edges of the recess, decrease, or even diminish, and the card may more easily be removed from the storage recess. Examples of resiliently deformable materials include cellular rubber and cellular polyethylene.

According to a second aspect, there is provided a data memory card storage sheet, comprising at least one storage device.

According to a third aspect, there is provided a data memory card storage case, comprising a storage sheet.

The storage sheet may be arranged in a case having at least one dimension that is equal to a dimension of a standard DVD or CD case.

This way, many existing storage systems for CDs and DVDs also may be used for storage of data memory cards.

The storage sheet may be arranged in said case such that a user opening the case in a conventional manner, when the data memory card is in the storage recess, is presented with the gripping portion at an upper right hand corner of the respective data memory card.

This increase usability and allows the majority of users (right-handed users) to even more conveniently remove memory cards from their storage positions. An upper right-hand corner gripping portion renders it natural to use the right-hand index finger at the gripping portion to grip and apply adequate force to overcome the holding forces.

### Brief Description of the Drawings

This, and other aspects of the invention, will now be described in some detail, with reference to the appended drawings.
Fig. 1 is a perspective view of a storage device having a storage recess, and a sheet-shaped data memory card suitable for storage in the recess.
Fig. 2a is a view from above of the storage device from fig. 1 having a sheet-shaped data memory card with a bevelled corner placed in the storage recess.
Fig. 2b is a cross-sectional side view of the storage device in Fig. 2a.
Fig. 3 is a perspective view of a data memory card storage sheet.
Fig. 4 is perspective view of a data memory card storage case having dimensions as a standard DVD-case.

### Description of Embodiments

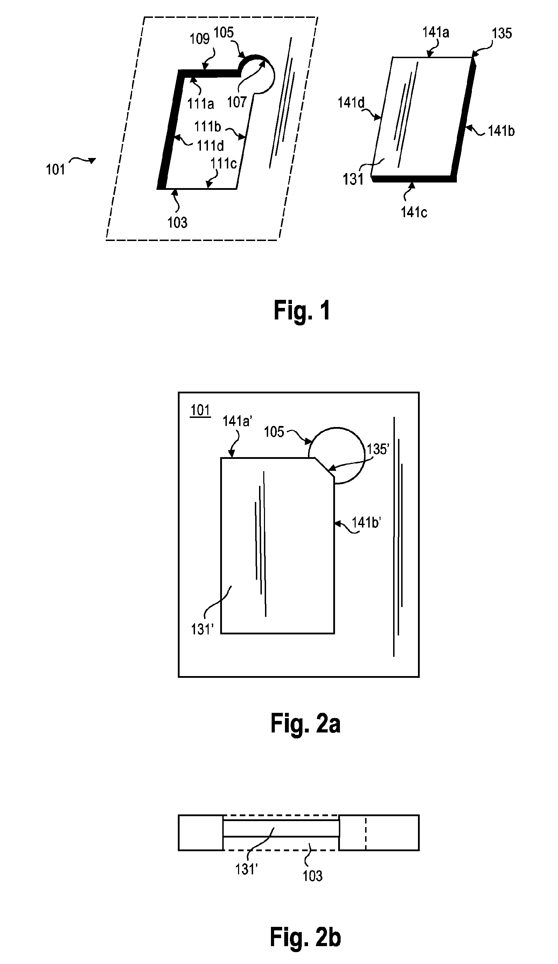

Fig. 1 shows a storage device 101 having a storage recess 103, and a sheet-shaped data memory card 131 suitable for storage in the recess 103. In the figure, the storage device 101 is delimited by dotted lines and only shown in the vicinity of the storage recess 103. The recess 103 may be a blind hole or a through hole, and comprises a holding portion 109 and a gripping portion 105 positioned at a corner of the recess 103.

As shown, in a transverse plane, parallel with the two major surfaces of the sheet shaped data memory card 131, the shown storage recess 103 has substantially the same shape as the data memory card. In the transverse plane, the recess 103 only differs in shape from the data memory card 101 by the gripping portion 105. Also, at the gripping portion, the edge 107 of the recess differs in shape from adjacent edges 111a and 111b.

The storage recess 103 may be sized and adapted for holding the data memory card by its edges, such that, when the data memory card 131 is placed in the recess 103, all edges 141a-d of the data memory card are in press fit contact with corresponding holding portion edges 111a-d of the recess 103.

The press fit contact may be accomplished by letting dimensions of the holding portion 109 be slightly smaller than corresponding dimensions of the data memory card 131.

There may be a space at the gripping portion, which allows a user to place at least a fingertip between an edge 107 of the recess 103 and an edge portion 135 of the card 131, when the card 131 is positioned in the recess.

In the shown example of Fig. 1, the edge portion 135 comprises a corner portion of the sheet shaped data memory card 131, such that, when the data memory card 131 is in the recess 103, the corner portion 135 is positioned at the gripping portion 105. This way, when the card 131 is positioned in the recess 103, a user may conveniently use a finger to interact with the corner 135 of the data memory card 131. Compared to a straight edge, a corner typically provides better grip, especially when a single finger is used to interact with the card. The user may lift the card 131 from the recess 103 by, for example, pressing a finger to the corner portion 135 of the card 131 and start lifting that portion of the card 131 up and out from the recess 103.

In the shown example, the gripping portion has a circular shape, however, the gripping portion may have alternative shapes, such as square, elliptic, or any shape that may provide a fingertip-sized space. Nevertheless, considering the shape of a fingertip, circular or elliptic may be a natural choice, especially when it is desirable to minimize the size of the gripping portion.

Still referring to Fig. 1, it should be noted that the griping portion extends along parts of two adjacent edges of the card 131. In alternative embodiments, these parts may be smaller or larger. It may be desirable to minimize those parts, since that means there will be a larger share of card edges 141 that can be used by the holding portion 109 to hold the card 131. The degree of how much the gripping portion extends along the parts of adjacent edges of the card, may be adjusted and selected such that the card may be securely stored and not easily be removed or fall out from the recess by mistake, while the card still should be easy to intentionally remove.

In Fig. 1 it can be seen that, at the gripping portion 105, the surface of the straight recess edge 111b curves in and becomes the edge portion 107, which has a concave edge surface. The edge portion 107 then ends at the straight recess edge 111a. The straight edges 111a-d of the recess 103, are the major edges of the recess. The edge portion 107 is located between and connects the two major edges 111a-b.

A recess that circumscribes a card typically has corners corresponding to corners of the card, at least for corners located at the end of major edges and that are connecting two major edges. For a card, such a major, or "confining" corner, is convex, and for a recess it is concave. However, it should be noted that a card also may have minor concave corners and minor convex corners along a major edge, as is the case for e.g. miniSD cards and microSD cards.

It may be noted from Fig.1 that the shape of the card 131 is rectangular and that it has 4 convex corners of substantially 90-degrees, and that the recess has 4 concave corner portions. A rectangular shape is the most basic and common shape of conventional sheet-shaped data memory cards. However, sheet shaped data memory cards, and storage devices adapted to these, may also be of other shapes. For example, some data memory cards that are used today have a bevelled corner, or is non-symmetrical in some other way, typically in order to facilitate correct insertion of a card in a reader/writer.

In an alternative embodiment, there is more than one gripping portion.

One or many edges 111a-d, 107 of the recess 103 may be resiliently deformable. In one embodiment, the material of the storage device 101 is resiliently deformable. The resiliently deformable material may be a polymer material, for example rubber or a thermoplastic elastomer (TPE). Examples of resiliently deformable materials include cellular rubber and cellular polyethylene. The resiliently deformable material should be relatively soft, i.e. soft, but not too soft. It should deform relatively easy, but not as easy as for example standard foam rubber, meaning that the resiliently deformable material should be able to provide larger press fit holding forces than foam rubber. Still, with a relatively soft material, it should not be required to use forces larger than what typically and conveniently can be produced by a human finger to resiliently deform the material. A hard resiliently deformable material in press fit contact with the data memory card, may exert too large, or too strong, holding forces, and thus make it hard both to place a memory card 131 in the recess 103, and to remove a card 131.

Further, for example, cellular rubber and cellular polyethene, have relatively low price, are easy to process, and available in sheets that may be cut into desired shapes.

Fig. 2a is a view from above of the storage device from fig. 1 with a sheet-shaped data memory card 131' placed in the storage recess 103. Fig. 2b is a cross-sectional side view of the storage device in Fig. 2a.

The sheet-shaped data memory card 131' shown in the recess 103 has a bevelled corner portion 135', which, in the shown example, is positioned at the gripping portion 105. It should be noted that, of course, the card 131' may be placed such that the bevelled corner is positioned at other corners of the recess 103, and in such case, there will be a 90-degree corner at the gripping portion 105.

In Fig. 2b it can be seen that the depth of the recess 103 may be larger than the thickness of the card 131'. It may be desirable to have a recess depth being at least the thickness of the card, since that allows a full height of an edge surface of the card to be in contact with the holding portion edges of the recess 103, which is beneficial for holding and retaining a stored card in the recess 103. However, in an alternative embodiment, the recess may have a depth that is less than the card thickness.

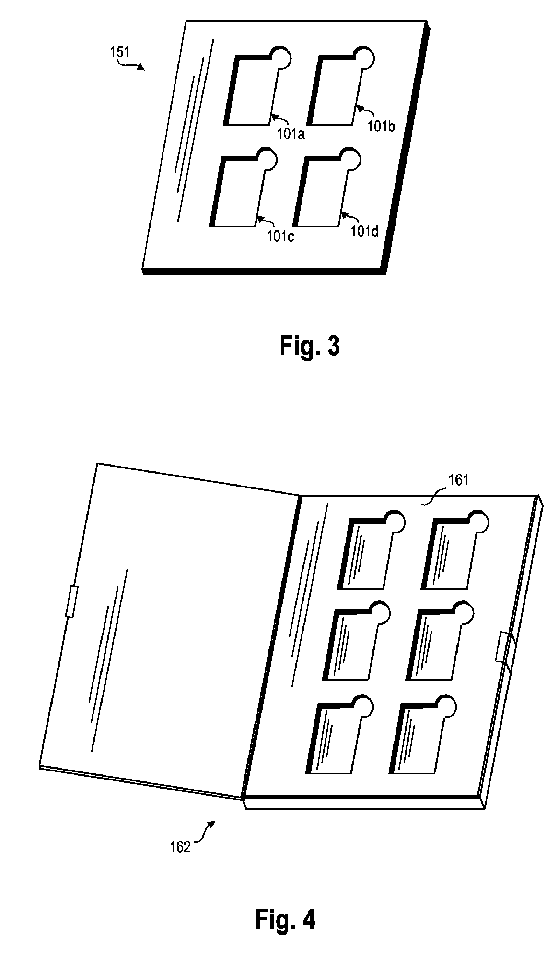

Fig. 3 shows, in a perspective view, a data memory card storage sheet 151 comprising 4 storage devices 101a-d. The devices may be produced by stamping or punching out recesses 103 in a sheet. Stamping out recesses 103 allows for cost efficient manufacturing. For example, a plane sheet of a single material may be used and all four storage devices 101a-d may be produced by stamping out recesses 103 simultaneously and substantially instantaneously. It is also possible to use a large sheet, stamp out a great number of recesses and then cut the resulting sheet into a desired number of smaller sheets.

In another embodiment the recesses 103 may be moulded.

In the shown example, the storage devices 101a-d comprises recesses 103 that are through holes. Alternatively, the recesses may be blind holes. The bottom of the blind holes may be accomplished by attaching, to the first sheet 151, a parallel second sheet, similar to the first sheet but without recesses.

The storage sheet may have dimensions corresponding to a standard CD case, or DVD case.

In the shown example, the devices 101a-d are all having the same recess shape and thus are adapted for a certain data memory card form factor or data memory card type. However, in another embodiment there may be different shapes, and in one embodiment there may be more than one shape per storage sheet, i.e. a storage sheet adapted for storage of more than one type of data memory card.

Fig. 4 is a perspective view of a data memory card storage case 162 having outer dimensions corresponding to a standard DVD case and comprising a storage sheet 161. The storage sheet 161 is similar to the storage sheet 151 in fig. 3, but comprises six storage devices 101, and have outer dimensions adapted for use inside a standard DVD case. In the shown example, one of the major surfaces of the DVD case constitutes bottom surface for the recesses of the storage devices, i.e., although the storage sheet 161 comprises recesses 103 that are through holes, in the storage case 162, in combination with the DVD case surface, the recesses 103 of the storage devices 101 are blind-holes.

The person skilled in the art realizes that the invention is by no means limited to the preferred embodiments described above. On the contrary, many modifications and variations are possible within the scope of the appended claims.

## Claims

1. A storage device (101) for a sheet-shaped data memory card (131), comprising a storage recess (103), sized and adapted for receiving and holding the data memory card (131), said storage recess (103) comprising:
a holding portion (109), where edge portions of the recess (103) are in contact with and hold the data memory card (131) by edges thereof when the data memory card is in the storage recess (103), and
a gripping portion (105) for facilitating a user's gripping of an edge portion of the data memory card (131) when the data memory card (131) is in the storage recess (103),
**characterized in that**
the gripping portion (105) is positioned at a corner portion of the storage recess (103).

2. The storage device as claimed in claim 1, wherein said gripping portion (105), when the data memory card (131) is in the storage recess (103), forms a substantially fingertip-sized space between an edge (107) of the storage recess (103) and an edge portion (135) of the data memory card (131).

3. The storage device as claimed in any one of the preceding claims, wherein the storage recess (103) substantially only differs in shape from the data memory card (131) by the gripping portion (105).

4. The storage device as claimed in any one of the preceding claims, wherein the gripping portion (105) extends along parts of two adjacent edges (141a, 141b) of the data memory card.

5. The storage device as claimed in any one of the preceding claims, wherein a shape of the holding portion (109) substantially coincides with a shape of the data memory card (131) and at least one dimension of the holding portion (109) is slightly smaller than a corresponding dimension of the data memory card (131), such that, when the data memory card (131) is in the storage recess (103), edges (111a-d) of the storage recess (103) are in press fit contact with the corresponding edges (141a-d) of the data memory card (131).

6. The storage device as claimed in any one of the preceding claims, wherein at least one edge portion of the storage recess (103) is resiliently deformable.

7. The storage device as claimed in claim 6, wherein all edge portions of the storage recess (103) are resiliently deformable.

8. The storage device as claimed in any one of the preceding claims, wherein the device (101) is made of a resiliently deformable material.

9. A data memory card storage sheet (151, 161), comprising at least one storage device (101) according to any one of the preceding claims.

10. A data memory card storage case (162), comprising a storage sheet (161) according to claim 9.

11. The data memory card storage case as claimed in claim 10, wherein the storage sheet (151, 161) is arranged in a case having at least one dimension that is equal to a dimension of a standard DVD or CD case.

12. The data memory card storage case, as claimed in claim 9 or 10, wherein the storage sheet (151, 161) is arranged in said case such that a user opening the case in a conventional manner, when the data memory card (131) is in the storage recess (103), is presented with the gripping portion (105) at an upper right hand corner (135) of the respective data memory card (131).
